# EUROPÄISCHE PATENTSCHRIFT

(11) **EP 0 521 195 B1**
(45) Veröffentlichungstag und Bekanntmachung des Hinweises auf die Patenterteilung: **07.06.1995**
(21) Anmeldenummer: 91121955.8
(22) Anmeldetag: 20.12.1991
(51) Int. Cl.: F16H 47/04

(54) **Hydrostatisch-leistungsverzweigtes Lastschaltgetriebe**
Split-torque hydromechanical transmission
Transmission hydromécanique à division de puissance

(30) Priorität: 04.07.1991 DE 4125988; 23.09.1991 DE 4131572
(43) Veröffentlichungstag der Anmeldung: 07.01.1993
(73) Patentinhaber: CLAAS Kommanditgesellschaft auf Aktien, 33428 Harsewinkel (DE)
(72) Erfinder: Frederiksen, Nils, W-4834 Harsewinkel (DE); Mohr, Jan-Hendrik, W-3587 Borken (DE)

(56) Entgegenhaltungen:
- EP-A- 0 195 452
- EP-A- 0 302 188
- EP-A- 0 464 413
- DE-A- 3 147 447

## Beschreibung

Die Erfindung betrifft ein Lastschaltgetriebe mit einer stufenlosen hydrostatisch-mechanischen Leistungsverzweigung durch ein hydrostatisches Stellgetriebe, ein vierwelliges Doppelplanetengetriebe und nachgeschaltete Ganggetriebe, wobei eine Eingangswelle über ein erstes Stirnradgetriebe in permanenter Wirkverbindung mit dem Stellgetriebe steht und außerdem über ein schaltbares Wendegetriebe mit einer Antriebswelle des Steges des zweiten der Planetengetriebe und des Außenrades des ersten der Planetengetriebe gesteuert kuppelbar ist und eine Ausgangswelle des hydrostatischen Stellgetriebes über eine Zahnradstufe mit einer Sonnenradwelle, auf der die beiden Sonnenräder der Planetengetriebe angeordnet sind, verbunden ist und eine Stegradwelle des ersten Planetengetriebes jeweils über ein erstes Ganggetriebe und eine zugehörige Schaltkupplung mit einer Abtriebwelle gesteuert verbindbar sind, sowie eine Außenradwelle des zweiten Planetengetriebes jeweils über ein weiteres Ganggetriebe und eine zugehörige Schaltkupplung mit der Abtriebswelle gesteuert kuppelbar sind,
wobei die Eingangswelle durch ein aus-einschaltbares Wendegetriebe mit der Antriebswelle verbindbar ist.

Ein derartiges Getriebe ist aus der DE 38 15 780 A1 (EP-A 302 188) bekannt. Es ist ein hydrostatisch mechanisch leistungsverzweigtes 4-Ganggetriebe,
wobei eine Eingangswelle über ein erstes Stirnradgetriebe in permanenter Wirkverbindung mit dem Stellgetriebe steht und außerdem über ein schaltbares Wendegetriebe mit einer Stegwelle des zweiten der Planetengetriebe und dem Außenrad des ersten der Planetengetriebe gesteuert- kuppelbar ist und eine Ausgangswelle des hydrostatischen Stellgetriebes über eine Zahnradstufe mit einer Sonnenradwelle, auf der die beiden Sonnenräder der Planetengetriebe angeordnet sind, verbunden ist und eine Stegwelle des ersten Planetengetriebes über erste Ganggetriebe und zugehörige Schaltkupplungen eines 1. und eines 3. Ganges mit einer Welle gesteuert verbindbar sind, sowie eine Außenradwelle des zweiten Planetengetriebes über weitere Ganggetriebe und zugehörige Schaltkupplungen eines 2. und eines 4. Ganges mit der Welle gesteuert kuppelbar sind. Dieses Getriebe erbringt in Vor- und Rückwärtsrichtung den gleichen Wandlungsgrad, der jedoch wegen der vier Gänge beschränkt ist, so daß das Getriebe nur für Fahrzeuge aber nicht für hoch belastete Landmaschinen verwendbar ist. Außerdem wird das Wendegetriebe mit Synchronisierungskupplungen geschaltet, die Verschleiß unterliegen und Energieverlust beim Synchronisieren bringen.

Ein weiteres Getriebe ist aus DE 36 05 203 A1 bekannt. Es ermöglicht ein stufenloses Schalten von acht Gängen über ein hydrostatisches Verstellgetriebe mit einer mechanischen Verzweigung über ein Doppelplanetengetriebe. Bei diesem Getriebe besteht die Welle, auf die die Ganggetriebe des 1. bis 4. Ganges wirken, aus Zwischenwellen, die über Gruppengetriebe mit zugehörigen Gruppenschaltkupplungen mit einer Getriebeausgangswelle gesteuert verbindbar sind. Das Anfahren erfolgt hierbei mit einer verschleiß- und verlustbehafteten Reibungskupplung, die sowohl dem mechanischen als auch dem hydrostatischen Getriebe vorgeordnet ist. Auch sind die Gangschaltkupplungen synchronisierend und dadurch verschleißbehaftet. Die Kupplungen des 1. bis 4. Ganges sind auf den Hohlwellen des Planetengetriebes angeordnet, wodurch sie relativ groß sind. Ein Reversierbetrieb des gesamten Getriebes ist nicht vorgesehen, so daß das Getriebe nur beschränkt einsatzfähig ist.

Weiterhin ist aus DE-PS 31 47 447 ist ein hydrostatisch-mechanisches Stellkoppelgetriebe mit eingangsseitiger Leistungsverzweigung bekannt, zu dem zwei dreiwellige Umlaufgetriebe I und II gehören, von denen eine Differenzwelle des ersten Umlaufgetriebes I mit der Summenwelle des zweiten Umlaufgetriebes II eine Einheit mit der Antriebswelle bilden und von denen die zweite Differenzwelle des ersten Umlaufgetriebes I mit einer Differenzwelle des zweiten Umlaufgetriebes II gekoppelt ist und über ein hydrostatisches Stellgetriebe mit der Antriebswelle in Verbindung steht und von denen schließlich die Summenwelle des ersten Umlaufgetriebes I einerseits und die Zweite Differenzwelle des zweiten Umlaufgetriebes II andererseits über Nachschaltstufen wechselweise auf die Abtriebswelle wirken können, so daß, durch jeweiliges Durchfahren des Verstellbereiches des hydrostatischen Getriebes, mehrere sich aneinanderreihende stufenlose Verstellbereiche den Gesamtverstellbereich der Übersetzung bilden, wobei die Nachschaltstufen in ihren Übersetzungen so abgestimmt sind, daß der Verstellbereichswechsel bei synchronen Drehzahlen beidseitig der zu schaltenden Kupplungen lastfrei und ohne Zugkraftunterbrechung erfolgt, wobei jedoch zum Anfahren eine Reibungskupplung vorgesehen ist. Das bekannte Getriebe hat 4 Vorwärtsgänge und einen Rückwärtsgang und ist somit für einen PKW-Betrieb geeignet; die Gesamtwandlung der Übersetzung beträgt ca. einen Faktor 8, der für Nutzfahrzeuge meist nicht ausreicht.

Weiterhin ist aus DE-OS 24 23 626 ein Vierganggetriebe mit hydrostatischer Leistungsverzweigung bekannt, bei dem eine Wirkungsgraderhöhung dadurch zu erreichen ist, daß in solchen Betriebspunkten, in- denen die Abtriebwelle des hydraulischen Wandlers praktisch still steht, diese durch eine Kupplung gehäuseseitig festgesetzt wird, so daß nur das mechanische Getriebe wirksam ist und der Wandler sich fast verlustlos im Leerlauf befindet. Weiterhin ist es vorgesehen, in Betriebspunkten, in denen die Eingangswelle und die Ausgangswelle des hydraulischen Wandlers einen Gleichlauf aufweisen, durch eine weitere, getrennte Kupplung diese Wellen fest miteinander zu verbinden, so daß der Wandler verlustarm mitläuft und die Leistung rein mechanisch übertragen wird.

Es ist Aufgabe der Erfindung das eingangs beschriebene hydraulischmechanisch verstellbare Koppelgetriebe nach der DE-A 38 15 780 dahingehend zu verbessern, daß die Gesamtwandlung der Übersetzung in beiden Fahrtrichtungen gegeben ist, die Zahl der synchronisierenden Kupplungen verringert ist, und die Gesamtwandlung um einen rein hydraulischen Anfahrbereich vergrößert ist, ohne daß ein zusätzliches Anfahrgetriebe eingesetzt ist.

Die Lösung der Aufgabe besteht darin,
- daß die Stegradwelle über eine Anfahrschaltkupplung
- mit der Sonnenradwelle verbindbar ist oder
- mit der Außenradwelle über eines der an dieser angeordneten Ganggetriebe verbindbar ist, indem dieses mit einem der an der Sonnenradwelle angeordneten gangfolgemäßig benachbarte Ganggetriebe hintereinander koppelbar ist, und
- daß jeweils in einem vollhydrostatischen Betriebsbereich das Wendegetriebe ausgeschaltet gesteuert ist und die Anfahrschaltkupplung geschlossen ist.

Vorteilhafte Ausgestaltungen sind in den Unteransprüchen angegeben.

Die Zahnräder der Ganggetriebe sind jeweils in der Reihenfolge der Gänge abwechselnd der Stegradwelle oder der Außenradwelle zugeordnet, wobei die Gegenräder jeweils der Abtriebwelle zugeordnet sind.

Die Verkopplung zweier der Wellen des Doppelplanetengetriebes erbringt vorteilhaft eine Anfahrschaltung mit vollhydraulischer Steuerung über das Hydraulikstellgetriebe. Eine verschleißbehaftete mechanische Kupplung zwischen dem Antriebsmotor und dem Getriebe entfällt somit.

Ein aus einer Neutralstellung vor- bzw. rückwärts schaltbares Wendegetriebe ist dem Schaltgetriebe vorgeordnet, so daß der gesamte Wandlungsbereich der Getriebeanordnung für beide Laufrichtungen der Schaltgetriebe gegeben ist.

Die Anzahl der Gänge und mit dieser die Größe des Wandlungsbereichs ist ggf. durch das zweistufige, den Ganggetrieben nachgeschaltete Gruppengetriebe so groß, daß das Gesamtgetriebe insbes. für fahrbare land- und forstwirtschaftliche Arbeitsgeräte geeignet ist.

Das Getriebe ist vorteilhaft durch eine elektronische Steuervorrichtung derart gesteuert, daß zum Gangschalten die Kupplungen, die die einzelnen Gangschaltungen herstellen, abhängig von vorgegebenen Schaltkriterien, in auf- oder absteigender Reihenfolge kuppelnd angesteuert sind und daß während der Zeiträume, in denen die Gänge geschaltet sind, das Stellgetriebe jeweils geregelt betrieben ist oder jeweils in die entgegengesetzte Stellung durchgesteuert wird, falls weiter herauf- oder heruntergeschaltet werden soll.

Die verschiedenen Getriebeanordnungen sind so ausgestaltet, daß nur wenige Synchronkupplungen benötigt werden. Die Steuervorrichtung wertet Drehzahlmeldungen von den jeweils zu koppelnden Getriebesträngen derart aus, daß die Klauenkupplungen jeweils dann geschaltet werden, wenn die zu verbindenen Wellen synchron drehen. Es ist bevorzugt vorgesehen, Kupplungspaare alternativ anzusteuernder Kupplungen zu verwenden, wodurch der Aufwand gering gehalten ist.

Die Ausgangswelle kann direkt nach außen geführt sein oder über ein Differentialgetriebe und ggf. ein weiteres Anpassungsgetriebe mit einer oder mehreren Achsen eines Fahrzeuges verbunden sein.

In einer ersten vorteilhafen Ausführung ist ein leistungsverzweigtes 7-Ganggetriebe mit einem zusätzlichen vollhydrostatischen Anfahrbereich geschaffen, wobei nur vier Doppel-Klauenkupplungen mit Mittelstellung für die Gangschaltung einschließlich des Anfahrbereiches benötigt werden, und eine weitere Doppelklauenkupplung mit Mittelstellung für das Wendegetriebe vorgesehen ist. Dies ist dadurch erreicht, daß die Kupplung des sechsten Ganges und die Anfahrschaltkupplung zusammengefaßt sind, indem entweder die Sonnenradwelle zu der benachbarten Stegwelle gekoppelt wird oder die als Hohlwelle ausgebildeten Stegwelle zu dem Getrieberad des sechsten Ganges verbunden wird, das auf dieser drehbar gelagert ist. Die drei anderen Doppel-Gangkupplungen sind konzentrisch zur Abtriebwelle angeordnet, weshalb sie kleiner im Durchmesser sind.

In einer zweiten vorteilhaften Ausführung ist ein Vierganggetriebe auf der als eine erste Zwischenwelle fungierenden Abtriebwelle angeordnet, und diesem ist ein weiteres zweistufiges Nachschaltgetriebe nachgeordnet, so daß insgesamt acht leistungsverzweigte Gangstufen kombiniert zu schalten sind, denen die vollhydrostatische Anfahrstufe voraus liegt. Die Verkopplung der Stegwelle und der Außenradwelle geschieht über eine neueartige Anfahrkupplung, mit der die Getrieberäder des zweiten und des dritten Ganges, die drehbar auf der Abtriebwelle gelagert sind, miteinander gekuppelt werden. Diese Anfahrkupplung ist als eine Doppelkupplung mit einer Neutralstellung ausgestaltet, und sie kuppelt in der anderen Wirkstellung das Getrieberad des dritten Ganges mit der Abtriebwelle.

Eine derartige Kupplung gleicher Bauweise, die von einer Hohlwelle zur inneren Lagerwelle oder das erste Kupplungsglied überbrückend zu einer darauf befindlichen weiteren Hohlwelle zu kuppeln ist, ist vorgesehen um einerseits der Neutralstellung ein Getrieberad des ersten Ganges mit der Abtriebwelle zu verbinden und andererseits dieses Getrieberad mit einem dreh bar auf der Abtriebwelle gelagerten Getrieberad des Nachschaltgetriebes zu verkuppeln. Dieses Getriebe weist weniger Zahnradsätze als das vorbeschriebene auf, obwohl es einen Gang mehr hat. Die überbrückenden Doppelkupplungen verringern den Aufwand an Stellmitteln.

Eine dritte vorteilhafte Ausgestaltung des Getriebes ist ein Siebenganggetriebe mit einem vollhydraulischen Anfahrbereich. Auch hierbei ist eine der überbrückenden Doppelkupplungen vorgesehen. Diese verbindet einerseits der Neutralstellung mit der Anfahrkupplung auf der Abtriebwelle drehbar gelagerte Getrieberäder des vierten und des fünften Ganges, und andererseits das genannte Getrieberad des vierten Ganges mit der Abtriebwelle. Auch bei diesem Getriebe sind für die sieben Gänge nur vier Doppel-Klauenkupplungen ohne Synchronisationsmittel vorhanden.

Vier Doppelkupplungen sind auf einer Welle mit einem gemeinsamen Drehzentrum angeordnet, was bauliche Vorteile bringt. Alle Kupplungen sind in gleicher Weise auszuführen, was steuerungstechnisch einfach ist. In jedem Gang sind stets nur zwei der Kupplungen eingeschaltet, die Wendekupplung eingerechnet.

An den Beispielen wird ersichtlicht, daß es jeweils in dem vollhydraulischen Betriebsbereich erforderlich ist, zwei der Wellen des Planetengetriebes direkt oder mittels mechanischer Getriebe zu verbinden. Vorzugsweise werden die Wellen die die Ganggetriebe jeweils abwechselnd antreiben, im Anfahrbereich miteinander gekoppelt, wobei ein Ganggetriebe auf der Stegwelle mit einem Ganggetriebe des gangmäßig benachbart tieferliegenden Ganges hintereinandergeschaltet zur Außenradwelle des Planetengetriebes verbunden ist. Der Planetensatz arbeitet somit bei dieser Verkopplung seiner Wellen über die neuartige Kupplung und weist keine direkt verbundenen Anschlußwellen auf. Diese überbrückende Kupplungsausführung läßt sich auch bei Getrieben anderer Gangzahlen einsetzen.

Die Raumausnutzung des Getriebes ist sehr gut; denn die kleine Anfahrkupplung ist im Bereich neben dem ausgedehnten Planetensatz angeordnet.

Vorteilhafte Ausgestaltungen sind in den Figuren 1 bis 7 dargestellt.
- Fig. 1: zeigt ein Getriebeschema eines Siebenganggetriebes mit einem Anfahrbereich;
- Fig. 2: zeigt ein Getriebeschema mit einem Anfahrbereich und einem Achtganggetriebe, das aus hintereinandergeschalteten Getrieben besteht;
- Fig. 3: zeigt ein weiteres Siebenganggetriebe mit einem Anfahrbereich;
- Fig. 4: zeigt eine überbrückende Doppelklauenkupplung, geschnitten;
- Fig. 5: zeigt eine eine vierte Ausführung als 8-Gang-Getriebe
- Fig. 6: zeigt eine fünfte Ausführung als 8-Gang-Getriebe;
- Fig. 7: zeigt eine sechste Ausführung als 8-Gang-Getriebe.

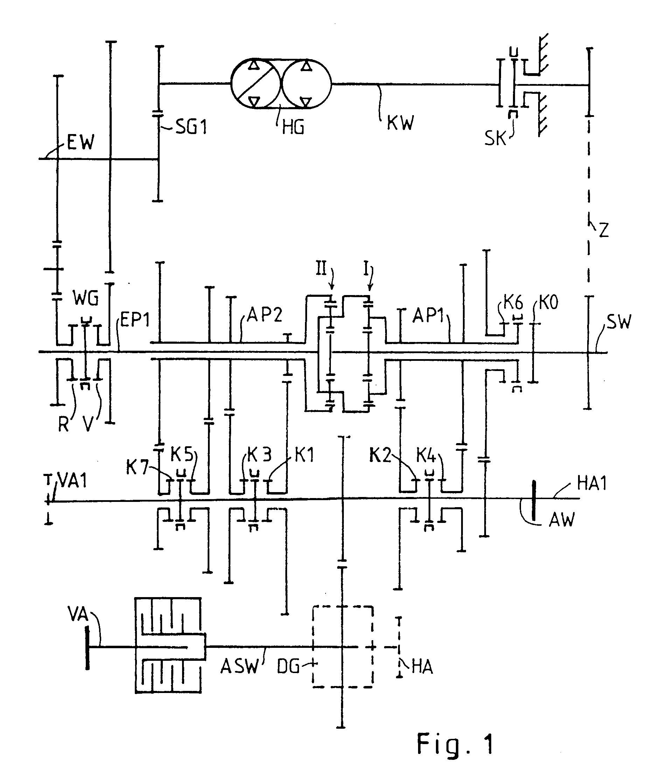

Das erste Ausführungsbeispiel, Fig. 1, zeigt ein Getriebe, dessen Eingangswelle (EW) über ein Stirnradgetriebe (SG1) ein hydraulisches Stellgetriebe (HG) antreibt, dessen Ausgangswelle (KW) über eine Zahnradstufe (Z) eine Sonnenradwelle (SW) eines Doppelplanetengetriebes (I, II) antreibt, das andererseits mit einer Antriebswelle (EP1) verbunden ist, die über ein Wendegetriebe (WG) mittels einer Wendegetriebekupplung (R, V) zur Eingangswelle (EW) verbindbar ist oder in einer Neutralstellung zu belassen ist und die mit dem Steg des zweiten Planetensatzes (II) sowie dem Außenrad des ersten Planetensatzes (I) verbunden ist.

Auf der als eine Hohlwelle ausgebildeten Außenradwelle (AP2) des zweiten Planetensatzes (II) sind die Getrieberäder der ungradzahlig benannten Gänge 1, 3, 5 und 7 angeordnet, und auf der ebenfalls als eine Hohlwelle ausgebildeten Stegradwelle (AP1) des ersten Planetnsatzes (I) sind die Getrieberäder der geradzahlig benannten Gänge 2, 4 und 6 angeordnet, wovon das Rad des sechsten Ganges dort drehbar gelagert ist. Die Gegenräder der Ganggetriebe sind auf der Abtriebswelle (AW) angeordnet, so daß diese mit einer zugehörigen Kupplung (K1, - K7) mit dieser kuppelbar sind.

Die Kupplungen des ersten und des dritten Ganges (K1, K3), des zweiten und des vierten Ganges (K2, K4) und des fünften und des siebten Ganges (K5, K7) sind jeweils paarweise als Klauenkupplungen ausgestaltet, die mittig eine Neutralstellung aufweisen. Die Kupplung des sechsten Ganges ist ebenfalls Teil einer Doppelkupplung, die einerseits der Neutralstellung eine Verbindung des sechsten Ganggetriebes zur Stegwelle herstellt und andererseits die Anfahrschaltkupplung (K0) umfaßt, die die Stegwelle mit der Sonnenradwelle verbindet.

Von der Abtriebswelle läßt sich unmittelbar seitlich eine Ausgangswelle herausführen, und es kann über ein Differentialgetriebe (DG) eine Antriebswelle eines Fahrzeuges daran angeschlossen sein, wenn das gesamte Getriebe als ein Antriebsblock ausgestaltet ist.

Für ein ökonomisches Fahren in den Betriebspunkten, in denen das Stellgetriebe keine Leistung überträgt, ist eine Sonderkupplung (SK) vorgesehen, die je nach vorliegendem Betriebspunkt geeignet gesteuert entweder das Stellgetriebe zur Sonnenradwelle durchschaltet oder die Sonnenradwelle gehäuseseitig festlegt.

Das gesamte Getriebe hat durch die geringe Anzahl von fünf Doppel-Kupplungen und die Sonderkupplung (SK) einen sehr kompakten Aufbau und ein einfaches Steuerungsschema, da auch keinerlei Synchronisierung erforderlich ist und zur Kupplungsansteuerung nur darauf zu achten ist, daß jeweils Drehzahlgleichheit an den miteinander zu kuppelnden Teilen besteht.

Das Getriebe eignet sich besonders, wenn ein geringer Abstand zwischen der Hinterachse und der Vorderachse eines Fahrzeuges vorhanden ist, wobei die Anschlüsse der Vorderachse (VA, VA1) bzw. der Hinterachse (HA, HA1) direkt von der Abtriebswelle (AW) oder von dem Differentialgetriebe (DG) aus gespeist sein können.

Im folgenden ist das Kupplungsschema dargestellt, welches für alle sieben Gänge und den Anfahrbereich jeweils zwei geschaltete Kupplungen aufweist.

### Schaltlogik

| Gang/Kupplung | K0 | K1 | K2 | K3 | K4 | K5 | K6 | K7 | R/V |
|---|---|---|---|---|---|---|---|---|---|
| 0. | X | X | | | | | | | |
| 1. | | X | | | | | | | X |
| 2. | | | X | | | | | | X |
| 3. | | | | X | | | | | X |
| 4. | | | | | X | | | | X |
| 5. | | | | | | X | | | X |
| 6. | | | | | | | X | | X |
| 7. | | | | | | | | X | X |

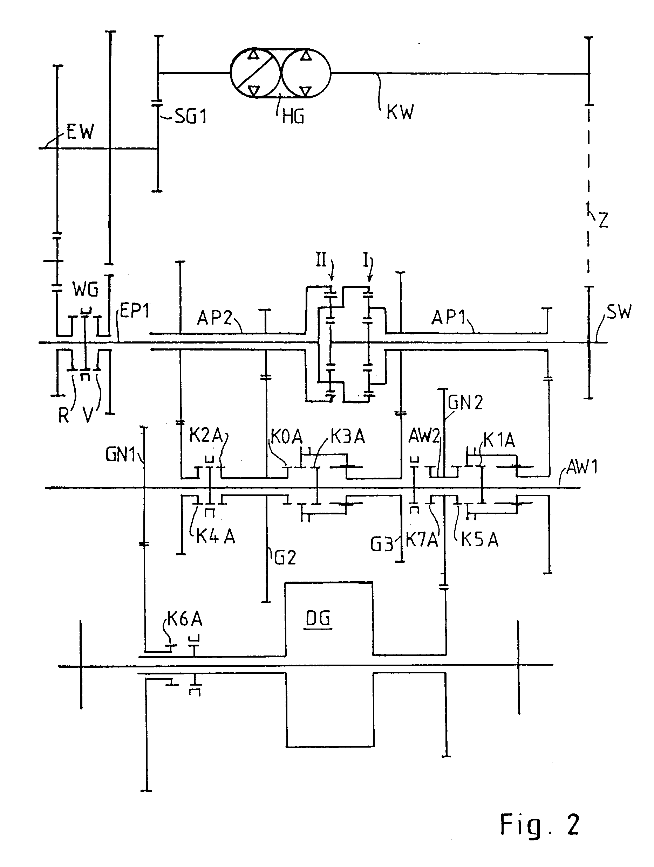

Fig. 2 zeigt ein weiteres Getriebeschema, das eingangsseitig bezüglich des Wendegetriebes (WG) und der Wendegetriebekupplung (R, V), des Stellgetriebe (HD) und der Ansteuerung des Doppelplanetengetriebes (I, II) in gleicher Weise wie die erste Ausführung ausgestaltet ist. Auf der Stegwelle (AB1) sind die Getrieberäder des ersten und des dritten Ganges angeordnet, und auf der Außenradwelle (AP2) des zweiten Planetengetriebes sind die Getrieberäder des zweiten und vierten Ganges angeordnet. Sämtliche Gegenräder zu den Gängen 1 bis 4 sind drehbar auf der Abtriebswelle (AB1) gelagert und durch Kupplungen (K1A - K4A) mit dieser verbindbar. Von der Abtriebswelle (AB1) ist ein erstes Nachschaltgetriebe (GN1) mit einer Kupplung (K6) zu einer Differentialgetriebewelle (DW) eines Differentialgetriebes (DG) zu verbinden. Weiterhin ist auf der Abtriebswelle (AW1) eine zweite Abtriebswelle (AW2), die als Hohlwelle ausgebildet ist, drehbar gelagert, die mit einem zweiten Nachschaltgetriebe (GN2) zu der Differentialgetriebewelle (DW) verbunden ist.

Die Getriebe des zweiten und des vierten Ganges sind über eine Doppelklauenkupplung mit der Abtriebswelle gesteuert verbindbar. Weiterhin sind der erste Gang und der dritte Gang jeweils mit einer überbrückenden Kupplung in einer Stellung dieser Doppelkupplungen mit der Abtriebswelle (AW1) verbindbar. Des weiteren dient die Doppelkupplung des dritten Ganges über eine Hohlwelle zur Verbindung des dritten Ganges mit dem zweiten Ganggetriebe mittels der Anfahrkupplung (K0A). Die andere überbrückende Kupplung dient in ihrer zweiten Stellung zur Verbindung des ersten Ganggetriebes mittels der Kupplung eines fünften Ganges (K5A) zur zweiten Abtriebswelle (AW2), so daß unmittelbar von dort im fünften Gang über das zweite Nachschaltgetriebe die Kraft weitergeleitet wird. Für die übrigen höheren Gänge verbindet eine Einzelkupplung (K7A) das zweite Nachschaltgetriebe mit der ersten Abtriebswelle, die wiederum durch den zweiten, den dritten oder den vierten Gang jeweils anzutreiben ist.

Für den Anfahrbereich ist es vorgesehen, daß, wie auch in den vier unteren Gängen, die Kupplung (K6A) des ersten Nachschaltgetriebes (GN1) geschlossen ist und daß die Kupplung des ersten Ganges (K1A) sowie die Anfahrschaltkupplung (KOA) betätigt sind. Auf diese Weise wird die Anfahrleistung über das hydrostatische Getriebe (HG) und dann durch das Doppelplanetengetriebe (I,II), sowie über ein Nachschaltgetriebe (GN1, GN2) auf das Differentialgetriebe (DG) übertragen. Eine Leistungsverzweigung über einen hydraulischen und einen mechanischen Zweig findet somit nicht statt, vielmehr wird hinter dem hydraulischen Getriebe im mechanischen Bereich die Leistung auf mehreren Wegen zur Stegwelle hin übertragen. Der Planetensatz wirkt als Übersetzungsglied, so daß am Ende des vollhydrostatischen Ganges an der Wendekupplung Synchrondrehzahl herrscht und diese dann ohne Synchronisierungsmittel eingeschaltet werden kann.

Außer der Kupplung des vierten Ganges (K4A) und des siebten Ganges (K7A) sind sämtliche Kupplungen einfache Klauenkupplungen; die genannten beiden Kupplungen haben Synchronisiereinrichtungen für den Übergang in den oberen bzw. unteren Ganggruppenbereich.

Das Schaltschema für die Anordnung gemäß Fig. 2 ist im folgenden dargestellt. Die Bezeichnungen A bzw. E bedeuten das Aus- bzw. Ein-Synchronisieren, das jeweils zu geeigneten Zeitpunkten vorzunehmen ist; beim Herunterschalten sind die Synchronisationsvorgänge jeweils umgekehrt.

| Gang/Kupplung | V/R | K01 | K1A | K2A | K3A | K4A | K5A | K6A | K7A |
|---|---|---|---|---|---|---|---|---|---|
| 0. | | X | X | | | | | X | |
| 1. | X | | X | | | | | X | |
| 2. | X | | | X | | | | X | |
| 3. | X | | | | X | | | X | |
| 4. | X | | | | | X | | X | |
| 5. | X | | | | | A/E | X | | E/A |
| 6. | X | | | X | | | | | X |
| 7. | X | | | | X | | | | X |
| 8. | X | | | | | X | | | X |

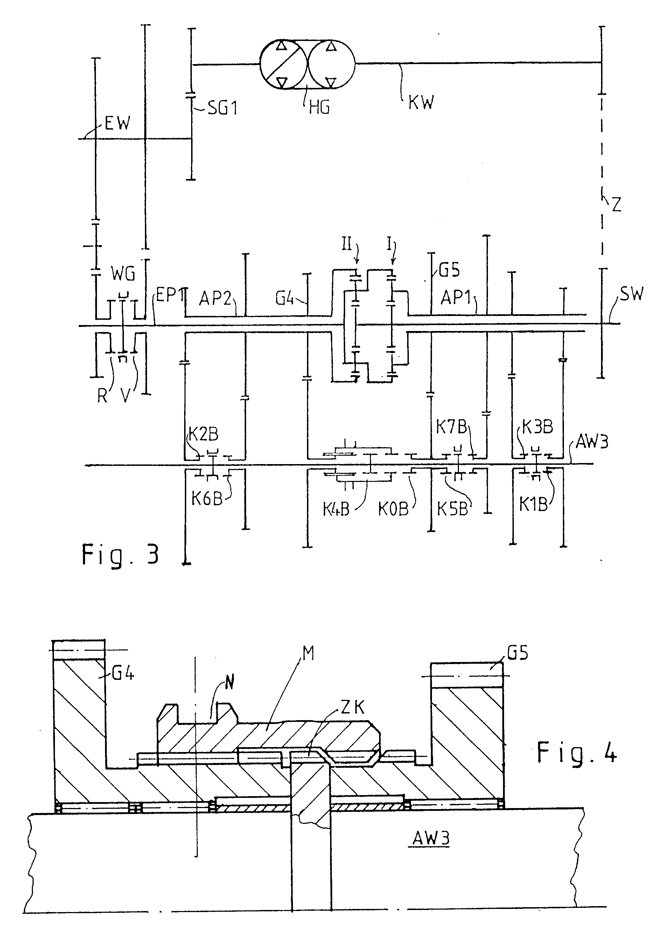

Eine weitere vorteilhafte Ausgestaltung zeigt die Fig. 3, wobei ebenfalls die Eingangswelle (EW), das Wendegetriebe (WG), das Stellgetriebe (HG) und der Doppelplanetensatz (I, II) in gleicher Weise wie bei den anderen Ausführungen ausgebildet ist.

Die Getrieberäder der ungradzahlig benannten Gänge 1, 3, 5 und 7 sind auf der Stegwelle angeordnet und die Getriebe der gradzahlig benannten Gänge 2, 4 und 6 sind auf der Außenradwelle angeordnet. Sämtliche Gegenräder der sieben Gänge sind drehbar auf der Abtriebswelle (AW3) gelagert und durch Klauenkupplungen steuerbar mit dieser zu verbinden. Es sind insgesamt im Ganggetriebe vier Doppelkupplungen vorgesehen, von denen eine die Kupplungen (K1B, K3B) des ersten und des dritten Ganges umfaßt, eine weitere die Kupplungen (K2B, K6B) des zweiten und des sechsten Ganges umfaßt, eine dritte die Kupplungen (K5B, K7B) eines fünften und eines siebten Ganges umfaßt und eine überbrückende Kupplung einerseits die Kupplung (K4B) des vierten Ganges (G4) zur Abtriebwelle (AW3) und andererseits der Neutralstellung die Anfahrkupplung (K0B) umfaßt, welche das Getriebe des vierten Ganges (G4) mit dem Getriebe des fünften Ganges (G5) über eine Hohlwelle oder Schiebemuffe unmittelbar miteinander verbindet.

Die Anordnung der vier Doppelkupplungen um die Abtriebswelle (AW3) ergibt einen sehr übersichtlichen und kompakten Aufbau.

Das Schaltschema der dritten Ausführung entspricht demjenigen der ersten beschriebenen Getriebeausführung.

Fig. 4 zeigt einen Querschnitt durch eine überbrückende Kupplung, wie sie in der zweiten und dritten Ausführung verwendet wird. Diese Kupplung besteht aus einer Schiebemuffe (M), welche auf einem Hohlwellenlageransatz eines ersten Zahnrades, das beispielsweise zu einem vierten Gang (G4), Fig. 3, gehört, und auf der Abtriebwelle (AW3) gelagert ist, auf der andererseits ein Zahnrad des fünften Ganges (G5) ebenfalls drehbar gelagert ist. Zwischen den beiden genannten Zahnrädern mit ihren Lageransätzen befindet sich ein Kupplungsrad (K4B), das fest mit der Abtriebswelle (AW3) verbunden ist. Die Schiebemuffe (M) weist einen inneren Zahnkranz auf, der auf einer Außenzahnung auf der Hohlwelle des Zahnrades des vierten Ganges axial verschieblich formschlüssig gelagert ist und weist anderenends einen Innenzahnkranz mit einer Kupplungsverzahnung auf, der passend zu einer Außenverzahnung des Kupplungsrades (K4B) und einer Außenverzahnung des Hohlwellenansatzes des Zahnrades des fünften Ganges (G5) gestaltet ist. Außenseitig trägt die Schiebemuffe (M) eine umlaufende Nut (N), in die Kupplungsstellmittel in bekannter Weise mit einer Kupplungsgabel eingreifen, so daß die Muffe (M) durch eine Axialverschiebung entweder zum Kupplungsrad (K4B) oder zu dem Hohlwellenansatz des Rades des fünften Ganges (G5) formschlüssig verbindet.

Die Lagerung der beiden Getrieberäderbuchsen der Räder des vierten und des fünften Ganges (G4, G5) erfolgt vorzugsweise über Nadellager mit geringer Reibung. Die beschriebene Art einer überbrückenden Kupplung Kann auch für andere Hohlwellen, die auf einer Innenwelle gelagert sind, wahlweise zur Verbindung der Innenwelle zu einer der Hohlwellen oder zur Verbindung der Hohlwellen untereinander eingesetzt werden, wobei eine mittlere Neutralstellung gegeben ist. Hierin wird eine eigenständige erfinderische Kupplungskonstruktion gesehen.

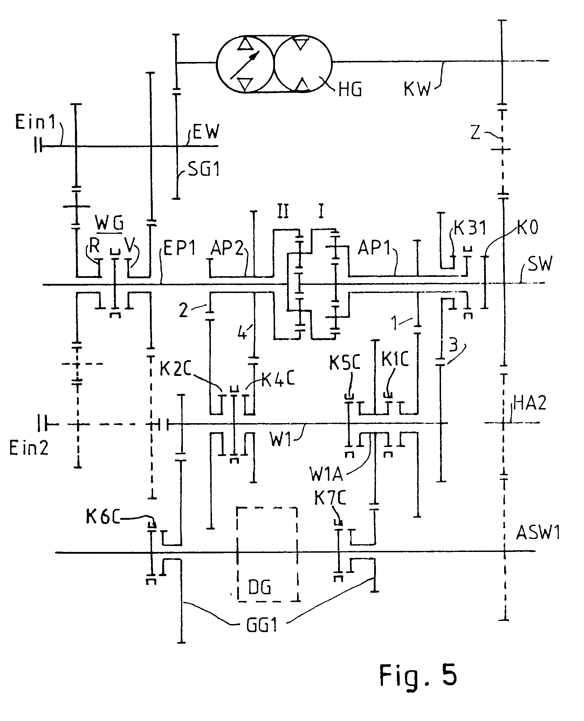

Figur 5 zeigt das Schaltschema eines Getriebeblockes, in dem ein hydraulisches Stellgetriebe (HG), ein Wendegetriebe (WG), ein Doppelplanetengetriebe (I, II), ein vierstufiges Zahnradschaltgetriebe und ein Gruppengetriebe (GG1) angeordnet sind. Der Getriebeeingang (Ein1) ist mit einer Eingangswelle (EW) verbunden, die das Stellgetriebe (HG) über ein erstes Stirnradgetriebe (SG1) antreibt und über weitere Stirnradgetriebe direkt und invers auf das Wendegetriebe (WG) gekoppelt ist. Über Klauenkupplungen (R,V) ist dieses Wendegetriebe (WG) aus einer Neutralstellung vor- oder rückdrehend mit einer ersten Stegwelle (EP1) des einen der Planetengetriebe (II) und mit dem Außenrad des andren der Planetengetriebe (I) verbunden. Die beiden Sonnenräder sind über die Sonneradwelle (SW) über eine Zahnradstufe (Z) mit der Ausgangswelle (KW) des Stellgetriebes (HG) verbunden.

Die Außenradwelle (AP2) des einen Planetengetriebes (II) trägt Zahnräder (2, 4) von Zahnradgetriebestufen eines zweiten und eines vierten Ganges, deren Gegenräder auf einer Zwischenwelle (W1) lagern und mit dieser über ein Kupplungspaar (K2C, K4C) wahlweise verbindbar sind. Die Stegwelle (AP1) des anderen Planetengetriebes (I) trägt Zahräder (1, 3) eines ersten und eines dritten Ganges. Das Gegenzahnrad des ersten Ganges ist auf der Stegwelle (AP1) drehbar gelagert und durch eine Klauenkupplung (K3C) gesteuert mit dieser verbindbar. Das Gegenrad dazu ist mit der ersten Zwischenwelle (W1) verbunden.

Die beiden Zwischenwellen (W1, W1A) sind jeweils über einen Gruppengetriebeteil mittels je einer zugeordneten Schaltkupplung (K6C, K7C) mit der Augangswelle (ASW1) wahlweise verbindbar. Außerdem sind die beiden Zwischenwellen (W1, W1A) durch eine Kupplung (K5C) miteinander verbindbar.

Die Ausgangswelle (ASW1) ist entweder direkt nach außen geführt oder auf ein Differentialgetriebe (DG) eines Achsantriebes oder über ein Zahnradgetriebe, das gestrichelt dargestellt ist, auf einen Ausgangswellenstumpf (HA2) gekoppelt, der in einer Blockbauversion im Getriebegehäuse einem Eingangswellenstumpf (Ein2) vorzugsweise koaxial zugeordnet liegt, der eine Zahnradkopplung, die gestrichelt dargestellt ist, zum Wendegetriebeeingang und zum Stellgetriebe (HG) besitzt.

Für das vollhydrostatische Anfahren ist eine Schaltkupplung (KO) zwischen der Sonnenradwelle (SW) und der Stegwelle (AP1) vorgesehen. Zwecks baulicher Vereinfachung ist diese Planetengetriebewellenkupplung (KO) mit der Kupplung (K31) des dritten Ganges als Kupplungspaar zusammengefaßt und wechselseitig zu betätigen.

Durch die Verbindung der Sonnenradwelle (SW) mit der Stegwelle (AP1) mittels der Schaltkupplung (KO) wird aus dem gesamten Planetensatz eine gekoppelte Einheit, die über das Stellgetriebe von der Sonnenradwelle (SW) aus angetrieben ist. Das Wendegetriebe (WG) ist dabei abgeschaltet.

Das gesamte Schaltschema der acht Gänge ist in folgender Tabelle dargestellt:

### Schaltlogik zu Fig. 5

- Gang 0:: vollhydrostatisch
- Gang 2-8:: leistungsverzweigt

| Hochschalten: | | | | | | | | | |
|---|---|---|---|---|---|---|---|---|---|
| Gang | V/R | KO | K1C | K2C | K3C | K4C | K5C | K6C | K7C |
| 0 | | X | X | X | | | | X | |
| 2 | X | | X | X | | | | X | |
| 3 | X | | X | | X | | | X | |
| 4 | X | | X | | | X | | X | |
| 5 | X | | X | | | A | E | | X |
| 7 | X | | | | X | | X | | X |
| 8 | X | | | | | X | X | | X |

| Runterschalten: | | | | | | | | | |
|---|---|---|---|---|---|---|---|---|---|
| Gang | V/R | KO | K1C | K2C | K3C | K4C | K5C | K6C | K7C |
| 8 | X | | | | | X | X | | X |
| 7 | X | | | | X | | X | | X |
| 6 | X | | | X | | | X | | X |
| 5 | X | | X | | | E | A | | X |
| 4 | X | | X | | | X | | X | |
| 3 | X | | X | | | X | | X | |
| 2 | X | | X | X | | | | X | |
| 0 | | X | X | X | | | | X | |
| X = eingeschaltet A = lastfreie, vorbereitende Ausschaltung (synchron) E = lastfreie, vorbereitende Einschaltung (synchronisierend) | | | | | | | | | |

Das Anfahren und Abbremsen bis zum Stillstand ist sowohl bei eingeschalteter Kupplung (K2C) des 2. Ganges mittels der Verkopplung des Doppelplanetengetriebes (I, II) vollhydraulisch vorgesehen und auch bei eingeschalteter Kupplung (K4C) des 4. Ganges, wie das folgende Schaltschema zeigt. Da jeweils beim Anfahren die Kupplungen (V, R) des Wendegetriebes (WG) ausgeschaltet sind, schließen sich der Anfahrdrehzahlbereich jeweils unterhalb des 2. bzw. 4. Ganges an, so daß diese Bereiche als 1. bzw. 3. Gang in den Tabellen bezeichnet sind, obwohl die Ganggetriebe des 1. bzw. 3. Ganges dort keine Leistung übertragen. Das Anfahren in höherem Gang ist insbes. im Fahrbetrieb bei geringer Last vorteilhaft.

| Gang | V/R | KO | K1C | K2C | K3C | K4C | K5C | K6C | K7C |
|---|---|---|---|---|---|---|---|---|---|
| 3* | | X | X | | | X | | X | |
| 4 | X | | X | | | X | | X | |
| 5 | X | | X | | | A | E | | X |
| 7 | X | | | | X | | X | | X |
| 8 | X | | | | | X | X | | X |
| 8 | X | | | | | X | X | | X |
| 7 | X | | | | X | | X | | X |
| 6 | X | | | X | | | X | | X |
| 5 | X | | X | | | E | A | | X |
| 4 | X | | X | | | X | | X | |
| 3* | | X | X | | | X | | X | |

Eine Synchronisierung der Zwischenwelle (W1) ist lediglich beim Heraufschalten beim Übergang vom 5. zum 6. Gangbereich notwendig, wozu die Kupplung (K5C), die die Zwischenwellenteile (W1, W1A) verbindet, als Synchronkupplung ausgebildet ist, und beim Herunterschalten vom 5. in den 4. Gangbereich, wozu die Kupplung (K4C) des 4. Ganges als Synchronkupplung ausgebildet ist.

Insgesamt erbringt dieses Getriebe bei geeigneter Auslegung mit sieben leistungsverzweigten Gängen einen Wandlungsbereich von ca. 40 : 1.

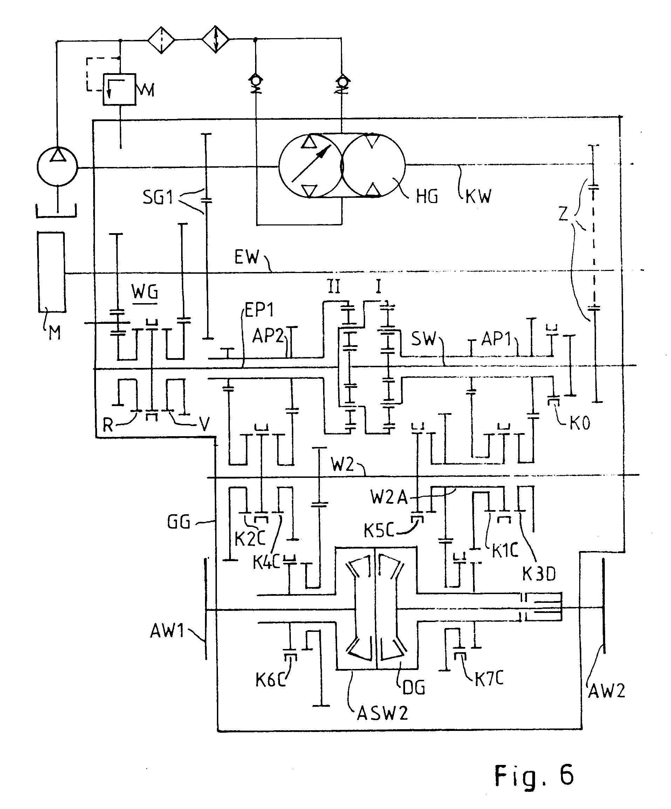

Figur 6 zeigt eine Variante des vorher beschriebenen Getriebes, bei dem die Planetengetriebewellenkupplung (KO) eine Einzelkupplung ist und die Kupplungen (K1C, K3D) des 1. und 3. Ganggetriebes als ein wechselweise schaltbares Kupplungspaar zusammengefaßt sind. Hierzu sind die Abtriebsräder dieser Ganggetriebe auf jeweils einer der Zwischenwellen (W2, W2A) drehbar gelagert und die zugehörigen Antriebsräder mit ihrer Antriebswelle (AP1) fest verbunden. Hierbei ist es vorgesehen, auch die Kupplung (K1C) des ersten Ganggetriebes synchronisierend auszuführen. Die Getriebeschaltschemata sind wie bereits zu Fig. 1 dargestellt. Die Bezugszeichen gleicher Teile sind gleich, so daß die Beschreibung entsprechend paßt. Das Differentialgetriebe (DG) mit den Abtriebswellen (AW1, AW2) ist hier detaillierter dargestellt. Vorteilhaft lassen sich die vorbeschriebenen Getriebe auch in den Gangbereichen unter dem 6. und unter dem 8. Gang voll hydrostatisch anfahren bzw. abbremsen, indem in diesen Gängen 5* bzw. 7* entkuppelt geschaltet und die Planetengetriebewellenkupplung (KO) geschlossen wird, wobei die übrigen Kupplungen gemäß dem höheren Gang 6 bzw. 8 eingelegt sind.

Durch die Planetengetriebewellenkupplung (KO) wird jeweils die Ausgangswelle (AP1) des ersten Planetensatzes (I) mit der Sonnenradwelle (SW) gekoppelt. Die gesamte Planetensatzbaugruppe (I, II) läuft somit als gekoppelte Einheit um. Statt einer starren Kopplung der beiden Planetensatzwellen (AP1, SW) ist eine entsprechende Wirkung auch durch die Kupplung eines anderen Wellenpaares der Planetensatzwellen (EP1, AP2, AP1, SW) zu erreichen. Auch deren Kopplung über eine getriebemäßige Verbindung mit einem festen Drehzahlverhältnis erbringt die Möglichkeit eines Anfahrens mit dem Wandlergetriebe bei ausgeschaltetem Wendegetriebe. Über den Doppelplanetensatz ergibt sich dann jeweils ein bestimmtes Übersetzungsverhältnis, und somit läßt sich das Wendegetriebe (WG) jeweils am Ende des vollhydrostatischen Getriebebereiches synchron aus- bzw. eingeschalten und die entsprechende unmittelbare oder mittelbare Kopplung der Planetensatzwellen (EP1, AP2, AP1, SW) kann gelöst werden.

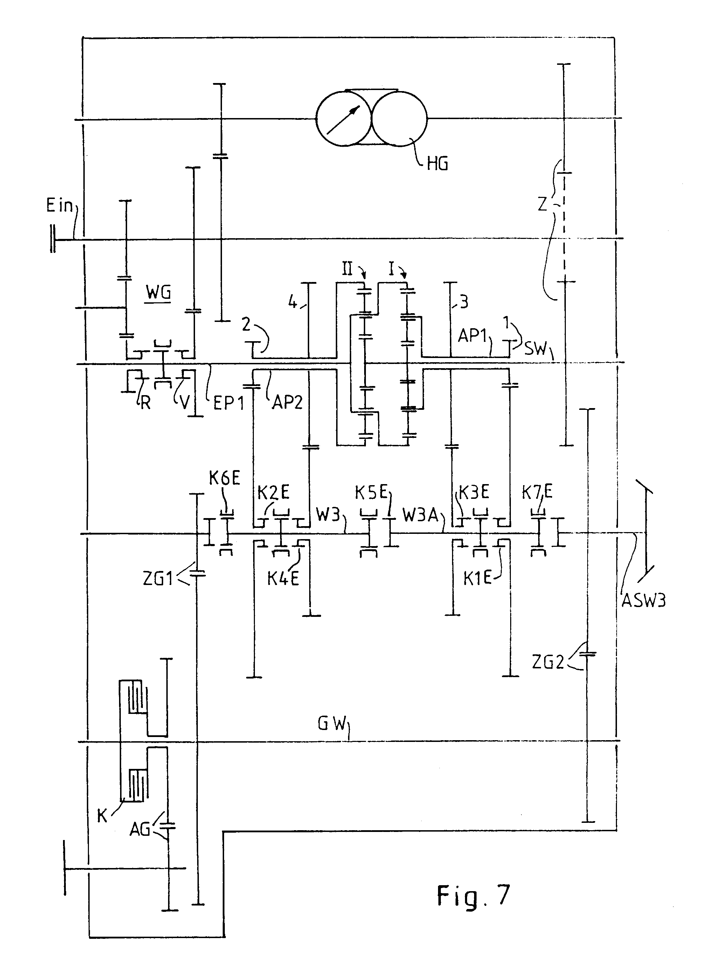

Figur 7 zeigt eine weitere derartige Getriebe-Schaltungsausführung, bei der die beiden Zwischenwellen (W3, W3A) über die Wellenkupplung (K5E) miteinander zu verbinden sind und die beiden Abtriebswellen (AP1, AP2) der Planetengetriebe (I, II) über je eine Getriebestufe 1 oder 3 und 2 oder 4, die auf den beiden Zwischenwellen (W3, W3A) angeordnet sind, zu jeweils dieser Zwischenwelle (W3, W3A) kuppelbar angeordnet sind und dadurch in einem festen Drehzahlverhältnis mittelbar miteinander zu verbinden sind. Auf diese Weise ist eine besondere Planetengetriebewelllenkupplung samt deren Stellvorrichtung nicht erforderlich, um das Getriebe zum Anfahren vollhydrostatisch ohne eingeschaltetes Wendegetriebe (WG) zu betreiben, wobei sieben, statt in der anderen Anordnung acht, leistungsverzweigte Gangbereiche vorgesehen sind. Die folgende Tabelle zeigt das Schaltschema für die insgesamt acht Gangbereiche, die vor- und rückwärts betreibbar sind.

### Schaltlogik zu Fig. 7

| Hochschalten: | | | | | | | | |
|---|---|---|---|---|---|---|---|---|
| Gang | V/R | K1E | K2E | K3E | K4E | K5E | K6E | K7E |
| 0 | | X | X | | | X | X | |
| 2 | X | | X | | | X | X | |
| 3 | X | | | X | | X | X | |
| 4 | X | E | | | X | A | X | |
| 5 | X | X | E | | A | | | X |
| 7 | X | | | | | X | | X |
| 8 | X | | | | X | X | | X |

| Herunterschalten: | | | | | | | | |
|---|---|---|---|---|---|---|---|---|
| Gang | V/R | K1E | K2E | K3E | K4E | K5E | K6E | K7E |
| 8 | X | | | | X | X | | X |
| 7 | X | | | X | | X | | X |
| 6 | X | | X | | | X | | X |
| 5 | X | X | | | E | A | | X |
| 4 | X | A | | E | X | | X | |
| 3 | X | | | X | | X | X | |
| 2 | X | | X | | | X | X | |
| 0 | | X | X | | | X | X | |
| X = Kupplung eingeschaltet A = lastfreie, vorbereitende Ausschaltung (synchron) E = lastfreie, vorbereitende Einschaltung (synchronisierend) | | | | | | | | |

Der Übersetzungsbereich des 1. leistungsverzweigten Ganges ist bei im Übersetzungsbereich des 0. vollhydrostatischen Ganges enthalten. Ein 1. leistungsverzweigter Gang ist somit nicht existent.

Ein vollhydrostatisches Anfahren ist beispielsweise auch im 3. Gang möglich, in dem das Wendegetriebe ausgeschaltet und die Kupplung (K4) des 4. Ganges bereits zusätzlich zur Kupplung (K33) des dritten Ganges eingeschaltet ist.

Es ist vorteilhaft, daß sämtliche Kupplungen (K1E, K3E; K2E, K4E) des 4. Ganggetriebes und die Wellenkupplung (K5E) koaxial angeordnet sind, wodurch eine Hohlwelle entfällt.

Es ist erforderlich, daß entweder an den Kupplungen (K1E, K3E) des ersten und dritten Ganges sowie den Kupplungen (K2E, K4E) des zweiten und vierten Ganges oder an der Wellenkupplung (K5E) und den Gruppenschaltkupplungen (K6E, K7E) oder, wie im Schaltschema vorgesehen, an den Kupplungen (K1E, K4E) des ersten und des vierten Ganges sowie an der Wellenkupplung (K5E) Synchronisiereinrichtungen vorhanden sind.

Die Ausgangswelle (ASW3) des Getriebes führt beispielsweise zu einem Differentialgetriebe einer Fahrzeugantriebsachse. Außerdem ist vorteilhaft ein weiterer Abtrieb an der Gruppengetriebewelle (GW) über eine Kupplung (K) auf ein Ausgangsgetriebe (AG) für eine zweite Antriebsachse eines Fahrzeuges zwecks eines Allradantriebes vorgesehen.

Die Ausgangswelle (ASW3) ist in der 2. Gruppe durch die zweite Gruppenkupplung (K7E) direkt zur Zwischenwelle (W3A) gekoppelt, so daß in dieser Gruppengetriebestufe nur ein Zahnradgetriebe unter Last im Eingriff ist. Hierbei ergibt sich vorteilhaft ein geringer seitlich er Versatz zwischen der Eingangswelle (EG) und der Ausgangswelle des Getriebeblocks. In der ersten Gruppenstufe erfolgt über die erste Gruppenkupplung (K6E) eine Verknüpfung von der Zwischenwelle (W3) über die Gruppengetriebewelle (GW) und zwei weitere Zahnradanordnungen (ZG1, ZG2), die das Gruppengetriebe darstellen. Diese Zwischengetriebestufen des Gruppengetriebes haben, da sie hintereinander geschaltt sind, je ein relativ kleines Untersetzungsverhältnis.

Vorteilhaft lassen sich die vorbeschriebenen Getriebe auch in den Gangbereichen unter dem 6. und unter dem 8. Gang vollhydrostatisch anfahren bzw. abbremsen, indem in diesen Gängen 5* bzw. 7* das Wendegetriebe (WG) entkuppelt geschaltet, die Wellenkupplung (K5E) geschlossen und die übrigen Kupplungen (K2E, K7E; K4E, K7E) gemäß dem höheren Gang 7 bzw. 8 eingelegt sind.

Ebenso ist ein Anfahren oder Abbremsen im vollhydraulischen Betrieb in den anderen Gängen möglich, wenn die Kupplungen des nächsthöheren Ganges mit eingelegt sind und die beiden Zwischenwellen miteinander verbunden sind. Dieses Schaltschema ist generell bei den Getrieben dieser Art und somit auch bei den Getrieben nach Fig. 1 und 2 möglich.

Für Fig. 7 ergibt sich folgendes Schema der Kupplungen jeweils für den vollhydraulischen Anfahrbetrieb:

| bis Gang | R/V K1E | K2E | K3E | K4E | K5E | K6E | K7E |
|---|---|---|---|---|---|---|---|
| 2. | X | X | | | X | X | |
| 3. | | X | X | | X | X | |
| 4. | | | X | X | X | X | |
| 5. | X | | | X | | X | X |
| 6. | X | X | | | X | | X |
| 7. | | X | X | | X | | X |
| 8. | | | X | X | X | | X |

Beim Anfahren in den 5. Gang tritt die Verknüpfung der Getriebegruppen über die gleichzeitig eingelegten Gruppengetriebekupplungen (K6E, K7E) ein, wobei die Wellenkupplung (K5E) getrennt ist.

## Patentansprüche

1. Lastschaltgetriebe mit einer stufenlosen hydrostatisch-mechanischen Leistungsverzweigung durch ein hydrostatisches Stellgetriebe (HG), ein vierwelliges Doppelplanetengetriebe (I, II) und nachgeschaltete Ganggetriebe, wobei eine Eingangswelle (EW) über ein erstes Stirnradgetriebe (SG1) in permanenter Wirkverbindung mit dem Stellgetriebe (HG) steht und mit einer Antriebswelle (EP1) des Steges des zweiten der Planetengetriebe (II) und des Außenrades des ersten der Planetengetriebe (I) gesteuert kuppelbar ist, und eine Ausgangswelle (KW) des hydrostatischen Stellgetriebes (HG) über eine Zahnradstufe (Z) mit einer Sonnenradwelle (SW), auf der die beiden Sonnenräder der Planetengetriebe (I, II) angeordnet sind, verbunden ist und eine Stegradwelle (AP1) des ersten Planetengetriebes (I) jeweils über ein erstes Ganggetriebe und eine zugehörige Schaltkupplung mit einer Abtriebswelle (AW) gesteuert verbindbar ist sowie eine Außenradwelle (AP2) des zweiten Planetengetriebes (II) jeweils über ein weiteres Ganggetriebe und eine zugehörige Schaltkupplung mit der Abtriebswelle (AW) gesteuert kuppelbar ist, wobei
die Eingangswelle (EW) durch ein aus-einschaltbares Wendegetriebe (WG) mit der Antriebswelle (EP1) verbindbar ist, **dadurch gekennzeichnet, daß**
- die Stegradwelle (AP1) über eine Anfahrschaltkupplung (K0, K0A, K0B)
- - mit der Sonnenradwelle (SW) verbindbar ist oder
- - mit der Außenradwelle (AP2) über eines der an dieser angeordneten Ganggetriebe (G2, G4, 2, 4) verbindbar ist, indem dieses mit einem der an der Sonnenradwelle (SW) angeordneten gangfolgemäßig benachbarten Ganggetriebe (G3, G5, 1, 3) hintereinander koppelbar ist, und
- daß jeweils in einem vollhydrostatischen Betriebsbereich das Wendegetriebe (WG) ausgeschaltet gesteuert ist und die Anfahrschaltkupplung (K0, K0A, K0B) geschlossen ist.

2. Lastschaltgetriebe nach Anspruch 1, dadurch gekennzeichnet, daß auf der Abtriebswelle (AW) jeweils Doppelklauenkupplungen (K1, K3; K2, K4; K5, K7) für die Gangschaltungen des 1. bis 5. und 7. Ganggetriebes angeordnet sind und die Anfahrkupplung (K0) mit der Kupplung (K6) des sechsten Ganggetriebes als eine Doppelklauenkupplung ausgebildet ist, die einerseits in einer Neutralstellung verbracht die Stegradwelle (AP1) mit der Sonnenradwelle (SW) kuppelt und andererseits das sechste Ganggetriebe, dessen eines Getrieberad auf der Stegwelle (AP1) drehbar gelagert ist, mit dieser kuppelt.

3. Lastschaltgetriebe nach Anspruch 2, dadurch gekennzeichnet, daß die Abtriebswelle (AW) einerseits mit einem Heckantrieb (HA1) und andererseits mit einem Frontantrieb (VA1) eines Fahrzeuges verbunden ist.

4. Lastschaltgetriebe nach Anspruch 2, dadurch gekennzeichnet, daß die Abtriebswelle (AW) über ein Zahnradgetriebe mit einem Differentialgetriebe (DG) verbunden ist, das einerseits mit einem Heckantrieb (HA) und andererseits mit einem Frontantrieb (VA) eines Fahrzeuges verbunden ist.

5. Lastschaltgetriebe nach Anspruch 1, dadurch gekennzeichnet, daß auf der Abtriebswelle (AW1) Getrieberäder eines 1. bis 4. Ganggetriebes drehbar gelagert sind, die jeweils mit einem Teil von mehreren Doppelkupplungen (K1A - K4A) mit der Abtriebswelle (AW1) verbindbar sind und daß ein Teil der Doppelkupplung (K3A) des dritten Ganggetriebes (G3) mit der Anfahrkupplung (K0A) mittels einer Schiebemuffe (M) als eine Doppelkupplung ausgebildet ist, die als Anfahrkupplung (K0A) über die Schiebemuffe (M) das dritte Ganggetriebe unmittelbar mit dem Getriebe (G2) des zweiten Ganges hintereinander kuppelt.

6. Lastschaltgetriebe nach Anspruch 5, dadurch gekennzeichnet, daß die Abtriebswelle (AW1) über ein erstes Nachschaltgetriebe (GN1) mit einer Differentialgetriebewelle (DW) eines ausgangsseitigen Differentialgetriebes (DG) mittels einer Schaltkupplung (K6A) verbunden ist und auf der Abtriebswelle (AW1) eine weitere Abtriebswelle (AW2) drehbar gelagert ist, die über ein zweites Nachschaltgetriebe (GN2) mit der Differentialgetriebewelle (DW) verbunden ist und die einerseits durch eine Synchronkupplung (K7A) mit der Abtriebswelle (AW1) verbindbar ist, sowie andererseits über einen Teil einer der Doppelkupplungen (K5A) mit dem Getriebe des ersten Ganges über eine Schiebemuffe verbindbar ist, und daß der Kupplungsteil (K4A) des vierten Ganggetriebes synchronisierend ist.

7. Lastschaltgetriebe nach Anspruch 1, dadurch gekennzeichnet, daß auf der Abtriebswelle (AW3) jeweils Doppelklauenkupplungen (K1B, K3B; K2B, K6B; K5B, K7B) für die Ganggetriebe je eines 1. bis 3. Ganges und je eines 5. bis 7. Ganges angeordnet sind und die Anfahrkupplung (K0B) mit der Kupplung (K4B) eines vierten Ganggetriebes (G4) eine Doppelkupplung bildet, die einerseits in einer Neutralstellung verbracht ein Getrieberad des Ganggetriebes (G4) des vierten Ganges mit der Abtriebswelle (AW3) kuppelt und andererseits das Getrieberad des vierten Ganggetriebes (G4) über eine Schiebemuffe (M) mit einem Getrieberad des Ganggetriebes (G5) des fünften Ganges kuppelt.

8. Lastschaltgetriebe nach einem der Ansprüche 5 bis 7, dadurch gekennzeichnet, daß die Schiebemuffe (M) außenseitig eine Ringnut aufweist, in die ein zweiseitig axialgerichtet wirkendes Stellmittel formschlüssig eingreift und daß die Schiebemuffe (M) auf einer Seite eine Innenverzahnung aufweist, die in einer Außenverzahnung eines Hohlwellenansatzes des einen der Getrieberäder (G4) formschlüssig axialverschieblich gelagert ist, und daß die Schiebemuffe auf der anderen Seite eine Innenverzahnung aufweist, die sich mittig in einer Neutralstellung befindet und einerseits derselben verschoben in einen Zahnkranz (ZK), der auf der inneren Welle (AW3) befestigt ist, formschlüssig kuppelnd eingreift und andererseits der Neutralstellung verschoben in eine Zahnung auf einem Hohlwellenfortsatz des anderen der Getrieberäder (G5) formschlüssig kuppelnd eingreift (Fig. 4).

9. Lastschaltgetriebe nach einem der Ansprüche 5 bis 8, dadurch gekennzeichnet, daß die Doppelkupplung (K0A, K0B) mit der Schiebemuffe (M) achsparallel neben dem Doppelplanetengetriebe (I, II) angeordnet ist.

10. Lastschaltgetriebe nach Anspruch 1, dadurch gekennzeichnet, daß die Stegradwelle (AP1) des ersten Planetengetriebes (I) über ein erstes Ganggetriebe und eine zugehörige Schaltkupplung (K3C, K3D, K3E) eines 3. Ganges mit einer ersten Zwischenwelle (W1, W2, W3) gesteuert verbindbar ist sowie die Außenradwelle (AP2) des zweiten Planetengetriebes (II) über weitere Ganggetriebe und zugehörige Schaltkupplungen (K2C, K4C, K2E, K4E) eines 2. und eines 4. Ganges mit der Zwischenwelle (W1, W2, W3) gesteuert kuppelbar sind, und eine Getriebeausgangswelle (ASW1, ASW2, ASW3) über ein erstes Gruppengetriebe und eine zugehörige erste Gruppenschaltkupplung (K6C, K6E) mit der Zwischenwelle (W1, W2, W3) verbindbar ist, und die Getriebeausgangswelle (ASW1, ASW2, ASW3) über ein zweites Gruppengetriebe und eine zugehörige zweite Gruppenschaltkupplung (K7C, K7E) mit einer zweiten Zwischenwelle (W1A, W2A, W3A) verbindbar ist, die mittels einer Schaltkupplung (K5C, K5E) eines 5. Ganges mit der ersten Zwischenwelle (W1, W2, W3) gesteuert verbindbar ist.

11. Lastschaltgetriebe nach Anspruch 10, dadurch gekennzeichnet, daß die Kupplung (K3C) des dritten Ganges auf der Stegradwelle (AP1) des ersten Planetengetriebes (I) angeordnet und mit der Planetengetriebewellenkupplung (KO) als eine Doppelkupplung ausgebildet ist.

12. Lastschaltgetriebe nach Anspruch 11, dadurch gekennzeichnet, daß nur die Schaltkupplungen (K4C, K5C) des 4. und des 5. Ganges Synchronisiereinrichtungen besitzen und sämtliche sonstigen Gangetriebe- und Gruppengetriebe-Schaltkupplungen (KO, K1C, K2C, K3C, K6C, K7C) als einfache Klauenkupplungen ausgebildet sind.

13. Lastschaltgetriebe nach Anspruch 10, dadurch gekennzeichnet, daß die Planetengetriebewellenkupplung (KO) eine Einzelkupplung ist und die Kupplungen (K1C, K3D) des 1. und 3. Ganges eine Doppelkupplung sind.

14. Lastschaltgetriebe nach einem der Ansprüche 10 bis 13, dadurch gekennzeichnet, daß die eine der Zwischenwellen (W1A, W2A) als eine Hohlwelle auf der ersten der Zwischenwellen (W1, W2) gelagert ist.

15. Lastschaltgetriebe nach einem der Ansprüche 10 bis 13, dadurch gekennzeichnet, daß die Zwischenwellen (W3, W3A) koaxial nebeneinander angeordnet und über eine Wellenkupplung (K5E) verbindbar sind.

16. Lastschaltgetriebe nach Anspruch 15, dadurch gekennzeichnet, daß zum Anfahren jeweils die Wendegetriebekupplungen (R, V) ausgekuppelt gesteuert sind und die beiden Zwischenwellen (W3, W3A) über die Wellenkupplung (K5E) miteinander verbunden sind und die Zwischenwellen (W3, W3A) jeweils über ein Ganggetriebe eines 1. oder 3. Ganges und eines 2. oder 4. Ganges jeweils über eine zugehörige Kupplung (K1E, K3E; K2E, K4E) jeweils mit einer Welle (AP1, AP2) des Planetengetriebes (I, II) verbunden gesteuert sind.

17. Lastschaltgetriebe nach Anspruch 16, dadurch gekennzeichnet, daß nur die Kupplungen (K1E, K3E, K2E, K4E) des 1. bis 4. Ganges oder die Wellenkupplung (K5E) und die Gruppengetriebekupplungen (K6E, K7E) jeweils eine Synchronisationseinrichtung aufweisen.

18. Lastschaltgetriebe nach einem der Ansprüche 10 bis 17, dadurch gekennzeichnet, daß die Ausgangswelle (ASW3) koaxial zu der Zwischenwelle (W3A) angeordnet ist und durch eine der Gruppengetriebekupplungen (K7C, K7E) unmittelbar mit dieser verbindbar ist.

19. Lastschaltgetriebe nach Anspruch 18, dadurch gekennzeichnet, daß das Gruppengetriebe aus zwei hintereinandergeschalteten Zahnradgetriebestufen (ZG1, ZG2) besteht, die über eine Getriebewelle (GW) miteinander verbunden sind und über die eine der Gruppengetriebekupplungen (K6E) mit einer der Zwischenwellen (W3) kuppelbar ist.

20. Lastschaltgetriebe nach Anspruch 19, dadurch gekennzeichnet, daß die Getriebewelle (GW) über eine Kupplung (K) und ggf. ein Ausgangsgetriebe mit einer weiteren Ausgangswelle verbindbar ist.

21. Lastschaltgetriebe nach Anspruch 20, dadurch gekennzeichnet, daß die erste der Ausgangswellen zu einem Differentialgetriebe einer ersten Fahrzeugantriebswelle und die zweite Ausgangswelle zu einer zweiten Fahrzeugantriebswelle eines allradangetriebenen Fahrzeuges führt.

22. Lastschaltgetriebe nach einem der Ansprüche 19 bis 21, dadurch gekennzeichnet, daß die Gruppengetriebekupplungen (K6E, K7E) mit den Zwischenwellen (W3, W3A) koachsial angeordnet sind.

## Claims

1. A load shift transmission with infinitely variable hydrostatic-mechanical power branching by a hydrostatic adjusting transmission (HG), a four-shaft double planetary transmission (I, II) and downstream-disposed speed transmissions, wherein an input shaft (EW) is permanently operatively connected to the adjusting transmission (HG) by way of a first spur gear transmission (SG1) and can be controlledly coupled to a drive shaft (EP1) of the carrier of the second of the planetary transmissions (II) and the external gear of the first of the planetary transmissions (I) and an output shaft (KW) of the hydrostatic adjusting drive (HG) is connected by way of a gear stage (Z) to a sun gear shaft (SW) on which the two sun gears of the planetary transmissions (I, II) are arranged and a carrier shaft (AP1) of the first planetary transmission (I) can be respectively controlledly connected to an output shaft (AW) by way of a first speed transmission and an associated shift coupling and an external gear shaft (APW) of the second planetary transmission (II) can be respectively controlledly coupled to the output shaft (AW) by way of a further speed transmission and an associated shift coupling,
characterised in that
- the input shaft (EW) can be connected to the drive shaft (EP1) by a disengageable-engageable reversing transmission (WG),
- the carrier shaft (AP1) can be connected by way of a starting shift clutch (K0, K0A, K0B)
-- to the sun gear shaft (SW) or
-- can be connected to the external gear shaft (AP2) by way of one of the speed transmissions (G2, G4, 2, 4) arranged on same, in that same can be coupled in succession in reactive mode to one of the speed transmissions (G3, G5, 1, 3) which are arranged on the sun gear shaft (SW) and which are adjacent in terms of speed, and
- in a respective fully hydrostatic operating range the reversing transmission (WG) is controlled to be disengaged and the starting shift clutch (K0, K0A, K0B) is closed.

2. A load shift transmission according to claim 1 characterised in that arranged on the driven shaft (AW) are respective double dog couplings (K1, K3; K2, K4; K5, K7) for the speed shifts of the 1st to 5th and 7th speed transmissions and the starting clutch (K0) with the coupling (K6) of the sixth speed transmission is in the form of a double dog coupling which on one side of a neutral position couples the carrier shaft (AP1) to the sun gear shaft (SW) and on the other side couples the sixth speed transmission of which one transmission gear is rotatably mounted on the carrier shaft (AP1) to same.

3. A load shift transmission according to claim 2 characterised in that the driven shaft (AW) is connected on the one hand to a rear drive (HA1) of a vehicle and on the other hand to a front drive (VA1) of the vehicle.

4. A load shift transmission according to claim 2 characterised in that the driven shaft (AW) is connected by way of a gear transmission to a differential transmission (DG) which is connected on the one hand to a rear drive (HA) of a vehicle and on the other hand to a front drive (VA) of the vehicle.

5. A load shift transmission according to claim 1 characterised in that rotatably mounted on the driven shaft (AW1) are transmission gears of a 1st to 4th speed transmission which can be respectively connected with a portion of one of a plurality of double couplings (K1A - K4A) with the driven shaft (AW1) and that a portion of the double coupling (K3A) of the third speed transmission (G3) with the starting clutch (K0A), by means of a sliding sleeve (M), is in the form of a double coupling which as a starting clutch (K0A) by way of the sliding sleeve (M) successively couples the third speed transmission directly to the transmission (G2) of the 2nd speed with reactive effect.

6. A load shift transmission according to claim 5 characterised in that the driven shaft (AW1) is connected with a first output shift transmission (GN1) to a differential transmission shaft (DW) of a differential transmission (DG) on the output side by way of a shift coupling (K6A) and rotatably mounted on the driven shaft (AW1) is a further driven shaft (AW2) which is connected with a second output shift transmission (GN2) to the differential transmission shaft (DW) and which on the one hand can be connected by a synchronous coupling (K7A) to the driven shaft (AW1) and which on the other hand can be connected by way of a portion of one of the double couplings (K5A) to the transmission of the first speed by way of a sliding sleeve, and that the coupling portion (K4A) of the fourth speed transmission is synchronising.

7. A load shift transmission according to claim 1 characterised in that arranged on the driven shaft (AW3) are respective double dog couplings (K1B, K3B; K2B, K6B; K5B, K7B) for the speed transmissions of a respective 1st to 3rd speed and a respective 5th to 7th speed and the starting clutch (K0B) with the coupling (K4B) of a fourth speed transmission (G4) forms a double coupling which on one side of a neutral position couples a transmission gear of the speed transmission (G4) of the fourth speed to the driven shaft (AW3) and on the other side couples the transmission gear of the fourth speed transmission (G4) by way of a sliding sleeve (M) to a transmission gear of the speed transmission (G5) of the fifth speed.

8. A load shift transmission according to one of claims 5 to 7 characterised in that on its outside the sliding sleeve (M) has an annular groove into which an adjusting means which acts in axially directed fashion on two sides positively lockingly engages and that the sliding sleeve (M) has on the one hand an internal spline configuration which is positively lockingly axially displaceably mounted in an external spline configuration of a hollow shaft projection portion of one of the transmission gears (G4) and on the other hand an internal spline configuration which is disposed centrally in a neutral position and on one side thereof engages positively lockingly couplingly into a gear ring fixed on the inner shaft (AW3) and on the other side positively lockingly couplingly engages into a spline configuration on a hollow shaft extension portion of the other of the transmission gears (G5).

9. A load shift transmission according to one of claims 5 to 8 characterised in that the double coupling (K0A, K0B) is arranged with the sliding sleeve (M) in axis-parallel relationship beside the double planetary transmission (I, II).

10. A load shift transmission according to claim 1 characterised in that the carrier shaft (AP1) of the first planetary transmission (I) can be controlledly connected by way of a first speed transmission and an associated shift coupling (K3C, K3D, K3E) of a 3rd speed to a first intermediate shaft (W1, W2, W3) and the external gear shaft (AP2) of the second planetary transmission (II) can be controlledly coupled by way of further speed transmissions and associated shift couplings (K2C, K4C, K2E, K4E) of a 2nd and 4th speeds to the intermediate shaft (W1, W2, W3), and a transmission output shaft (ASW1, ASW2, ASW3) can be connected by way of a first group transmission and an associated first group shift coupling (K6C, K6E) to the intermediate shaft (W1, W2, W3), and the transmission output shaft (ASW1, ASW2, ASW3) can be connected by way of a second group transmission and an associated second group shift coupling (K7C, K7E) to a second intermediate shaft (W1A, W2A, W3A) which can be controlledly connected by means of a shift coupling (K5C, K5E) of a 5th speed to the first intermediate shaft (W1, W2, W3).

11. A load shift transmission according to claim 10 characterised in that the coupling (K3C) of the third speed is arranged on the carrier shaft (AP1) of the first planetary transmission (I) and with the planetary shaft coupling (KO) is in the form of a double coupling.

12. A load shift transmission according to claim 11 characterised in that only the shift couplings (K4C, K5C) of the 4th and 5th speeds have synchronising means and all other speed transmission and group transmission shift couplings (KO, K1C, K2C, K3C, K6C, K7C) are in the form of simple dog couplings.

13. A load shift transmission according to claim 10 characterised in that the planetary transmission shaft coupling (KO) is a single coupling and the couplings (K1C, K3D) of the 1st and 3rd speeds are a double coupling.

14. A load shift transmission according to one of claims 10 to 13 characterised in that one of the intermediate shafts (W1A, W2A) is mounted as a hollow shaft on the first of the intermediate shafts (W1, W2).

15. A load shift transmission according to one of claims 10 to 13 characterised in that the intermediate shafts (W3, W3A) are arranged coaxially side-by-side and can be connected by way of a shaft coupling (K5E).

16. A load shift transmission according to one of claims 15 characterised in that for starting purposes the reversing transmission couplings (R, V) are respectively controlled to be disengaged and the two intermediate shafts (W3, W3A) are connected together by way of the shaft coupling (K5E) and the intermediate shafts (W3, W3A) are respectively controlled to be connected to a shaft (AP1, AP2) of the planetary transmission (I, II) respectively by way of a speed transmission of a 1st or 3rd speed and a 2nd or 4th speed respectively by way of an associated coupling (K1E, K3E; K2E, K4E).

17. A load shift transmission according to claim 16 characterised in that only the couplings (K1E, K3E, K2E, K4E) of the 1st to 4th speeds or the shaft coupling (K5E) and the group transmission couplings (K6E, K7E) respectively have a synchronisation means.

18. A load shift transmission according to one of claims 10 to 17 characterised in that the output shaft (ASW3) is arranged coaxially relative to the intermediate shaft (W3A) and can be directly connected to same by one of the group transmission couplings (K7C, K7E).

19. A load shift transmission according to claim 18 characterised in that the group transmission comprises two gear transmission stages (ZG1, ZG2) which are connected in succession and which are connected together by way of a transmission shaft (GW) and which can be coupled to one of the intermediate shafts (W3) by way of one of the group transmission couplings (K6E).

20. A load shift transmission according to claim 19 characterised in that the transmission shaft (GW) can be connected to a further output shaft by way of a coupling (G) and possibly an output transmission.

21. A load shift transmission according to claim 20 characterised in that the first of the output shafts leads to a differential transmission of a first vehicle drive shaft and the second output shaft leads to a second vehicle drive shaft of an all wheel-driven vehicle.

22. A load shift transmission according to one of claims 19 to 21 characterised in that the group transmission couplings (K6E, K7E) are arranged coaxially with the intermediate shafts (W3, W3A).

## Revendications

1. Boîte de transmission composée d'une transmission en continu dédoublée hydrostatique et mécanique dont les embranchements passent par une transmission hydrostatique (HG), une transmission planétaire double (I, II) à quatre arbres et un train secondaire d'engrenage, dans laquelle un arbre d'entrée (EW) est en liaison permanente par un engrenage (SG1) avec la transmission hydrostatique et peut être accouplé sur commande avec l'arbre (EP1) entraînant le porte-satellites de la deuxième transmission planétaire (II) et la couronne extérieure de la première transmission planétaire (I), l'arbre de sortie (KW) de la transmission hydrostatique (HG) étant relié au moyen d'un engrenage (Z) avec un arbre (SW) sur lequel sont montés les deux porte-satellites des transmissions planétaires (I et II), un arbre (AP1) solidaire du porte-satellites de la première transmission planétaire (I) étant relié sur commande par un premier engrenage et un embrayage avec un arbre de sortie (AW), de même qu'un deuxième arbre (AP2) solidaire du porte-satellites de la deuxième transmission planétaire (II) étant aussi sélectivement relié par un engrenage et un embrayage avec l'arbre d'entraînement (AW), caractérisée en ce que l'arbre d'entrée (EW) peut être accouplé à l'arbre de transmission (EP1) au moyen d'accouplement réversible (WG), pouvant être enclenché dans un sens ou dans l'autre, en ce que l'arbre creux (AP1) solidaire des porte-satellites peut être accouplé au moyen d'un embrayage de démarrage (KO, KOA, KOB) avec l'arbre (SW) solidaire des pignons solaires ou avec l'arbre (AP2) solidaire de la couronne extérieure, par un des engrenages (G2, G4, 2, 4) montés sur cet arbre (AP2), dans la mesure où celui-ci peut être accouplé à la suite l'un de l'autre en combinaison avec les engrenages (G3, G5, 1, 3) qui sont proches dans la suite des opérations de changement de vitesses, en ce que dans une fonction complètement hydrostatique, la pignonerie d'inversion (WG) est hors d'action et l'embrayage de démarrage (KO, KOA, KOB) est enclenché.

2. Boîte de transmission selon la revendication 1, caractérisée en ce que des accouplements doubles à crabots (K1, K3; K2, K4; K5, K7) pour l'enclenchement des rapports 1 à 5 et 7 sont prévus sur l'arbre d'entraînement (AW) et en ce que l'embrayage de démarrage (KO) est conçu en combinaison avec l'accouplement du sixième rapport comme un accouplement double à crabots, lequel d'un côté de la position de point mort relie l'arbre (AP1) avec l'arbre des pignons solaires (SW), et de l'autre côté enclenche le sixième rapport dont un engrenage est monté rotatif sur l'arbre (AP1), en accouplant cet arbre (AP1) avec ce pignon de sixième.

3. Boîte de transmission selon la revendication 2, caractérisée en ce que l'arbre de transmission (AW) est relié d'une part au système de propulsion arrière (HV1) et d'autre part au système de propulsion avant (AV1) d'un véhicule.

4. Boîte de transmission selon la revendication 2, caractérisée en ce que l'arbre de transmission (AW) est relié par l'entremise d'un engrenage à un différentiel (DG) qui est en prise d'une part avec le système de propulsion arrière (HA) et d'autre part avec le système de propulsion avant (VA) d'un véhicule.

5. Boîte de transmission selon la revendication 1, caractérisée en ce que des pignons des rapports 1 à 4 sont montés librement sur l'arbre (AW1), ces pignons pouvant être enclenchés par une partie de plusieurs accouplements doubles (K1A-K4A) avec l'arbre (AW1) et en ce qu'une partie de l'accouplement double (K3A) du troisième rapport (G3) est construite comme un accouplement double avec l'accouplement de démarrage (KOA) par l'entremise d'un accouplement à manchon (M) mobile, cet accouplement double fonctionnant comme accouplement de démarrage (KOA) mettant par l'entremise du manchon (M) l'engrenage de troisième vitesse directement en liaison avec l'engrenage (G2) de deuxième vitesse.

6. Boîte de transmission selon la revendication 5, caractérisée en ce que l'arbre de sortie (AW1) est relié à un arbre (DW) d'un différentiel (DG) au moyen d'un premier engrenage (GN1) et d'un accouplement (KGA), et en ce qu'un deuxième arbre (AW2) de sortie creux est monté libre sur le premier arbre de sortie (AW1), ce deuxième arbre (AW2) étant en liaison avec l'arbre (DW) du différentiel au moyen de l'engrenage (GN2) et pouvant être accouplé d'une part par un accouplement synchronisé (K7A) avec l'arbre (AW1), d'autre part avec le pignon de première vitesse par une partie des accouplements doubles (K5A) et un manchon mobile, et en ce que la partie d'accouplement (K4A) de la quatrième vitesse est synchronisée.

7. Boîte de transmission selon la revendication 1, caractérisée en ce que des accouplements doubles à crabots (K1B, K3B, K2B, K6B, K5B, K7B) sont montés sur l'arbre de sortie (AW3) et permettent d'enclencher un des rapports 1 à 3 et 5 à 7, et en ce que l'embrayage de démarrage (KOB) forme avec l'accouplement (K4B) du quatrième rapport (G4) un accouplement double qui, dans une position d'un côté de la position neutre relie un pignon du quatrième rapport (G4) à l'arbre de sortie (AW3) et dans une position de l'autre côté de la position neutre relie ce pignon du quatrième rapport (G4) par un manchon mobile (M) à un pignon du cinquième rapport (G5).

8. Boîte de transmission selon une des revendications 5 à 7, caractérisée en ce que le manchon mobile (M) présente une gorge extérieure dans laquelle un moyen de commande agissant dans les deux sens axiaux s'engage sans jeu, et en ce que le manchon (M) présente d'un côté une denture intérieure qui est montée sans jeu sur une denture extérieure d'un cylindre creux solidaire d'un pignon de l'engrenage (G4), et en ce que ce manchon (M) présente de l'autre côté une denture intérieure qui se trouve en position neutre intermédiaire, et qui d'un côté de cette position engage une couronne dentée fixée sur l'arbre intérieur (AW3), et de l'autre côté engage une denture extérieure sur un cylindre creux solidaire d'un pignon de l'engrenage (G5).

9. Boîte de transmission selon les revendications 5 à 8, caractérisée en ce que l'accouplement double (KOA, KOB) est monté avec le manchon mobile (M) de façon parallèle à l'axe à côté de la transmission planétaire double.

10. Boîte de transmission selon la revendication 1, caractérisée en ce que l'arbre (AP1) solidaire du porte-satellites de la première transmission planétaire (I) peut être accouplé sur commande à un premier arbre intermédiaire (W1, W2, W3) par l'engrenage du premier rapport et un embrayage solidaire (K3C, K3D, K3E) du troisième rapport, en ce que l'arbre (AP2) solidaire de la couronne de la deuxième transmission planétaire (II) peut être accouplé sur commande à l'arbre intermédiaire (W1, W2, W3) par des engrenages supplémentaires et les embrayages solidaires (K2C, K4C, K2E, K4E) des rapports 2 et 4, en ce que l'arbre de sortie (ASW1, ASW2, ASW3) peut être relié à l'arbre intermédiaire (W1, W2, W3) par un premier groupe d'engrenages et un premier groupe d'embrayages (K6C, K6E), et en ce que l'arbre de sortie (ASW1, ASW2, ASW3) peut être relié à un deuxième arbre intermédiaire (W1A, W2A, W3A) par un deuxième groupe d'engrenages et un deuxième groupe d'embrayages (K7C, K7E), ce deuxième arbre intermédiaire (W1A, W2A, W3A) pouvant être accouplé au premier arbre intermédiaire (W1, W2, W3) par un embrayage (K5C, K5E) du cinquième rapport.

11. Boîte de transmission selon la revendication 10, caractérisée en ce que l'embrayage (K3C) du troisième rapport est monté sur l'arbre (AP1) solidaire du premier porte-satellites, et est monté comme un embrayage double avec l'embrayage (KO) de l'arbre solidaire des pignons solaires.

12. Boîte de transmission selon la revendication 11, caractérisée en ce que seulement les embrayages (K4C, K5C) des rapports 4 et 5 sont pourvus de synchronisateurs, et en ce que les autres embrayages pour les rapports et les transmissions sont de simples accouplements à crabots.

13. Boîte de transmission selon la revendication 10, caractérisée en ce que l'embrayage (KO) de l'arbre portant les pignons solaires est un embrayage simple et en ce que les embrayages (K1C, K3C) des rapports 1 et 3 sont des embrayages doubles.

14. Boîte de transmission selon une des revendications 10 à 13, caractérisée en ce qu'un des arbres intermédiaires (W1A, W2A) est monté comme un arbre creux sur le premier des arbres intermédiaires (W1, W2).

15. Boîte de transmission selon une des revendications 10 à 13, caractérisée en ce que les arbres intermédiaires (W3, W3A) sont montés coaxialement l'un à côté de l'autre, et en ce qu'ils peuvent être accouplés au moyen d'un embrayage (K5E).

16. Boîte de transmission selon la revendication 15, caractérisée en ce que pour le démarrage, les embrayages d'inversion (RV) sont au point mort, en ce que les deux arbres intermédiaires (W3, W3A) sont accouplés par l'embrayage (K5E), et en ce que ces deux arbres intermédiaires (W3, W3A) sont accouplés sur commande à un arbre (AP1, AP2) de la transmission planétaire et ce, chaque fois par un engrenage d'un des rapports 1 ou 3 et un engrenage des rapports 2 ou 4, ou par un embrayage solidaire (K1E, K3E; K2E, K4E).

17. Boîte de transmission selon la revendication 16, caractérisée en ce que seulement les embrayages (K1E, K3E, K2E, K4E) des rapports 1 à 4, ou l'embrayage (K5E) et les embrayages des groupes de rapports (K6E, K7E) comportent une synchronisation.

18. Boîte de transmission selon une des revendications 10 à 17, caractérisée en ce que l'arbre de sortie (ASW3) est monté coaxialement à l'arbre intermédiaire (W3A), et en ce que cet arbre peut être accouplé directement à l'arbre intermédiaire par un des embrayages de groupe (K7C, K7E).

19. Boîte de transmission selon la revendication 18, caractérisée en ce que le groupe de transmission est composé de deux étages d'engrenages placés l'un derrière l'autre, reliés par un arbre de transmission (GW) et par lequel un des embrayages de groupe (KGE) peut être accouplé à un des arbres intermédiaires (W3).

20. Boîte de transmission selon la revendication 19, caractérisée en ce que l'arbre de transmission (GW) peut être accouplé à un arbre de sortie supplémentaire par un embrayage (K), et éventuellement à une transmission de sortie.

21. Boîte de transmission selon la revendication 20, caractérisée en ce que le premier des arbres de sortie est en communication avec le différentiel d'un premier arbre moteur du véhicule, et que le deuxième est en communication avec un deuxième arbre moteur du véhicule avec traction sur toutes les roues.

22. Boîte de transmission selon une des revendications 19 à 21, caractérisée en ce que les embrayages de groupe (K6E, K7E) sont montés coaxialement avec les arbres intermédiaires (W3, W3A).
